# EUROPEAN PATENT APPLICATION

(11) **EP 3 628 587 A1**
(43) Date of publication of application: **01.04.2020**
(21) Application number: 19189981.4
(22) Date of filing: 05.08.2019
(51) Int. Cl.: B64C 11/00, B64C 11/48, B64D 27/02, B64D 27/24, B64D 33/10, B64D 35/06, F02C 7/32, F02C 7/36, F02K 3/06, F02K 3/072, B64D 27/00

(54) **AIRCRAFT PROPULSION SYSTEM**

(30) Priority: 03.09.2018 GB 201814256
(71) Applicant: Rolls-Royce plc, London N1 9FX (GB)
(72) Inventor: Harvey, Giles, Derby, Derbyshire DE24 8BJ (GB)
(74) Representative: Rolls-Royce plc

(57) **Abstract**

An aircraft propulsion system (10) comprises first and second propulsors (13a, 13b). An epicyclic reduction gearbox (25) is coupled to an input shaft (24). The reduction gearbox (25) comprises a sun gear (27) coupled to the input shaft (24), a plurality of planet gears (28) which mesh with the sun gear (27) and are mounted to a planet carrier (30), and a ring gear (29) which meshes with the plurality of planet gears (28). The first propulsor (13a) is located upstream of the second propulsor (13b). The first propulsor (13a) is coupled to the sun gear (27), and the second propulsor (13b) is coupled to one of the planet carrier (30) and the ring gear (29).

## Description

The present disclosure concerns a propulsion system for an aircraft.

In the pursuit of improved fuel burn, geared fan drive aircraft turbofans are being developed. In a geared turbofan, a reduction gearbox is provided, which couples a fan drive turbine to a fan, such that the fan turns at a slower rate than the turbine. Such arrangements allow for large fan diameters (and so lower fan pressure ratios and higher bypass ratios), while maintaining a small diameter turbine.

Separately, electric aircraft propulsors are also being developed. In an electric aircraft propulsor, a fan is driven by an electric motor by electrical power provided from one or both of a battery and a prime mover such as an internal combustion engine driven electrical generator. Where an internal combustion engine is used to drive a generator to provide electrical power for electrical propulsors, such a system is known as a "hybrid electrical" system.

According to a first aspect there is provided an aircraft propulsion system comprising:
first and second propulsors;
an epicyclic reduction gearbox coupled to an input shaft, the reduction gearbox comprising a sun gear coupled to the input shaft, a plurality of planet gears which mesh with the sun gear and are mounted to a planet carrier, and a ring gear which meshes with the plurality of planet gears;
wherein the first propulsor is located upstream of the second propulsor, and
wherein the first propulsor is coupled to the input shaft, and the second propulsor is coupled to one of the planet carrier and the ring gear.

Advantageously, two propulsors are provided, with the first propulsor rotating at a higher speed than the second propulsor.

The or each of the propulsors may comprise open rotor propellers. Alternatively, the or each of the propulsors may comprise ducted fans.

The first propulsor may have a smaller outer diameter than the second propulsor. Advantageously, the first propulsor may be able to provide a higher pressure ratio across the propulsor, without having excessively high propulsor tip speeds. Consequently, a high overall propulsion system pressure ratio can be achieved at a relatively low second propulsor tip speed. This can therefore provide one or more of relatively low noise (in view of the low tip speeds) and a relatively high mass flow (and so high propulsive efficiency). Furthermore, air is accelerated adjacent the root region of the second fan, thereby increasing the work performed by the propulsion system for a given second fan diameter.

The first propulsor may comprise a rotating shroud provided at a radially outer end of the first propulsor. Consequently, tip vortices from the first propulsor are avoided, thereby increasing efficiency of the second propulsor downstream. Furthermore, a higher pressure ratio can be developed by the first propulsor, thereby further increasing propulsion system power density. Additionally, mixing between the flows from the first propulsor and the second propulsor is improved, thereby further reducing noise and improving efficiency.

In one embodiment, the second propulsor may be mounted to the planet carrier. Consequently, the first and second propulsor co-rotate, with the first propulsor rotating at a higher speed than the second propulsor. In view of the relatively close proximity of the first and second propulsor, it may be preferable to co-rotate the first and second propulsor, in order to minimise noise. Since the second propulsor root does relatively little work, there may only be minimal advantage in cancelling swirl from the first propulsor.

Alternatively, in a second embodiment, the propulsor fan may be mounted to the ring gear. Advantageously, the first and second propulsors counter-rotate, allowing for high relative propulsor speeds, and so higher pressure ratios at relatively low rotational speed in a static reference frame. Such a system may also avoid the need for a stator between the first and second fans.

The aircraft propulsion system may comprise an electric motor coupled to the sun input shaft. In this embodiment, the propulsion system comprises an electric propulsion system or a hybrid propulsion system. Advantageously, the second propulsor rotates relatively slowly relative to the rotational speed of the electric motor. Faster turning electric motors can be smaller and lighter for a given power, and so the overall weight of an electric propulsion system can be reduced. Furthermore, a single motor can be used to rotate both fans.

The propulsion system may comprise a plurality of outlet guide vanes located downstream of the second propulsor. The electric motor may be mounted to one or more of the outlet guide vanes.

The electric motor may comprise a fluid cooling system configured to cool one or more of the rotor and the stator of the electric motor. The fluid cooling system may comprise an oil cooling system. The fluid cooling system may comprise cooling passages located within one or more outlet guide vanes.

The aircraft propulsion system may comprise a gas turbine engine. The gas turbine engine may comprise a turbine coupled to an electrical generator. The electrical generator may be electrically coupled to the motor.

Alternatively or in addition, the turbine of the gas turbine engine may be coupled to the sun input shaft. In this embodiment, the propulsion system comprises a geared turbofan. Advantageously, the second fan can rotate at a lower speed than the turbine, allowing for a smaller, more power dense turbine.

The gas turbine engine may comprise a gas turbine engine core comprising a compressor coupled to a turbine. The first propulsor may have an outer diameter substantially equal to a diameter of an inlet of the compressor. Advantageously, the compressor may be fed with higher pressure air from the first propulsor, which may increase overall gas turbine engine compression ratio, and so increase gas turbine engine thermal efficiency.

According to a second aspect there is provided an aircraft comprising the propulsion system of the first aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a plan view of an aircraft;
**Figure 2** is a sectional side view of a first aircraft propulsion system for the aircraft of figure 1;
**Figure 3** is a view from a side of a reduction gearbox of the aircraft propulsion system of figure 2;
**Figure 4** is a sectional side view of part of the aircraft propulsion system of figure 2;
**Figure 5** is a sectional side view of a second aircraft propulsion system; and
**Figure 6** is sectional side view of a third aircraft propulsion system.

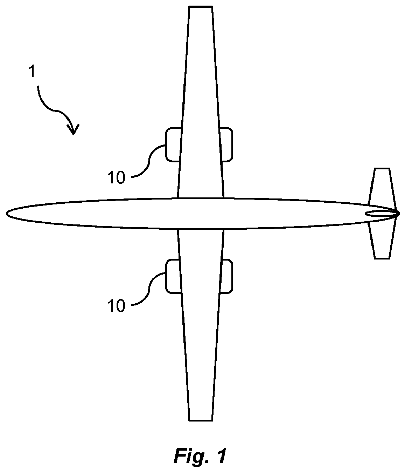

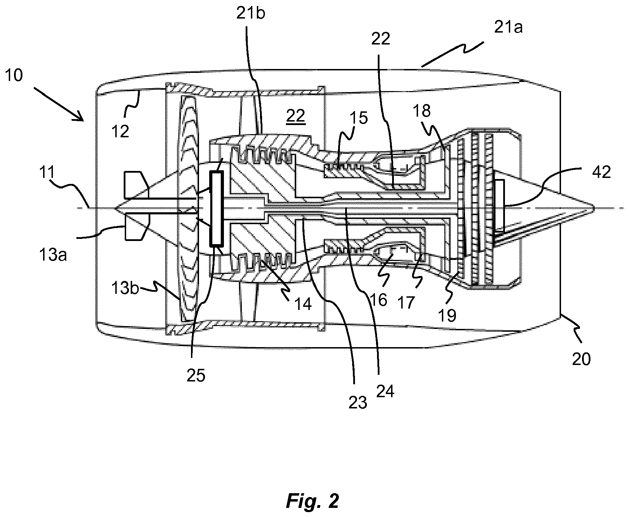

With reference to Figure 1, an aircraft 1 is shown, having a propulsion system 10. The propulsion system is shown in further detail in figures 2 to 4 and comprises a gas turbine engine generally indicated at 10, having a principal and rotational axis 11. The engine 10 comprises, in axial flow series, an air intake 12, a first propulsive fan 13a, a second propulsive fan 13b, a low-pressure compressor 14, a high pressure compressor 15, combustion equipment 16, a high-pressure turbine 17, an intermediate pressure turbine 18, a low-pressure turbine 19 and an exhaust nozzle 20. A fan casing 21a generally surrounds the engine 10 and defines the intake 12, and an engine core casing 21b generally surrounds engine core components comprising the compressors 14, 15, combustor 16 and turbines 17, 18, 19.

The gas turbine engine 10 works in the conventional manner so that air entering the intake 12 is accelerated by the fans 13a, 13b to produce two air flows: a first air flow into the compressor 14 and a second air flow which passes through a bypass duct 21 to provide propulsive thrust. The compressors 14, 15 compress the air flow directed into it before delivering that air to the combustion equipment 16.

In the combustion equipment 16 the air flow is mixed with fuel and the mixture combusted. The resultant hot combustion products then expand through, and thereby drive the turbines 17, 18, 19 before being exhausted through the nozzle 20 to provide additional propulsive thrust. The high 17, intermediate 18, and low 19 pressure turbines drive respectively the high pressure compressor 14, intermediate pressure compressor 14 and the fans 13a, 13b, each by suitable interconnecting shaft 22, 23 24.

Other gas turbine engines to which the present disclosure may be applied may have alternative configurations. By way of example such engines may have an alternative number of interconnecting shafts (e.g. two) and/or an alternative number of compressors and/or turbines.

The low pressure shaft 24 drives the fans 13a, 13b via an epicyclic reduction gearbox 25, which drives first and second output shafts 26a, 26b to drive the first and second fans 13a, 13b respectively. As will be understood, either the high or intermediate pressure turbines 17, 18 could be coupled to the fans 13a, 13b instead. The low pressure shaft 24 (or either of the other shafts 23, 22) also optionally drives an electrical generator 42. The gearbox 25 is shown in more detail in figure 2.

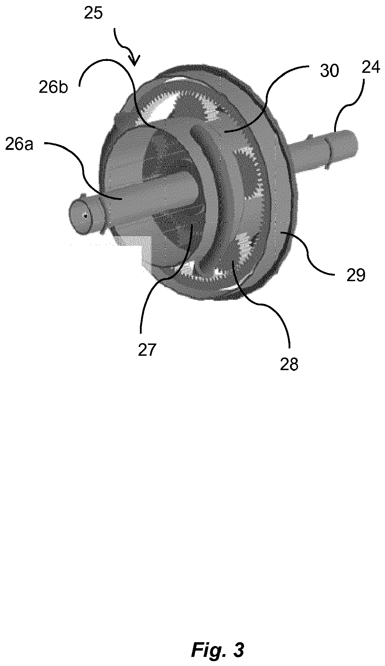

Referring now to figure 3, the single stage reduction gearbox 25 comprises a sun gear 27 coupled to an input shaft in the form of the low pressure shaft 24. The sun gear 27 meshes with planet gears 28 which are arranged radially outward of the sun gear 27, and which in turn mesh with an annular ring gear 29 which surround the planet gears 28. The planet gears 28 are rotatably mounted to a planet carrier 30, which is in turn mounted for rotation.

The reduction gearbox 25 is in the form of a planetary gearbox, in which the ring gear 29 is held stationary, while the planet gears 28 and planet carrier 30 rotate in normal use. The first output shaft 26a is mounted to the sun gear 27, on an opposite side of the gearbox to the input shaft 24, and so is coupled to the input shaft 24, and thereby is configured to rotate at the same speed and in the same direction as the input shaft 24. The second output shaft 26b is mounted for rotation with the planet carrier 30, and is supported by a bearing (not shown) which is in turn mounted to static structure in the form of a forward gearbox mount (not shown).

Consequently, the first fan 13a is directly driven by the low pressure turbine, with no reduction or step-up gearing therebetween, whereas a reduction gear is provided in the torque path between the low pressure turbine and second fan 13b.

Arrows in figure 3 illustrate the direction of rotation where the input shaft 24 rotates clockwise as seen from the front of the fans 13a, 13b. As can be seen, each of the input shaft 24 and the first and second output shafts 26a, 26b rotate in a common direction (clockwise in this case). However, the planet carrier 30 and second output shaft 26b rotate at a slower rate than the input shaft 24 and first output shaft 26a. In the described embodiment, the second output shaft 26b rotates at a rate approximately 4 times slower than the input shaft 24 and first output shaft 26a, such that the reduction gearbox 25 can be said to have a 4:1 reduction ratio. As will be understood, by varying the diameters of the sun, planet and ring gears 27, 28, 29, the reduction ratio can be varied.

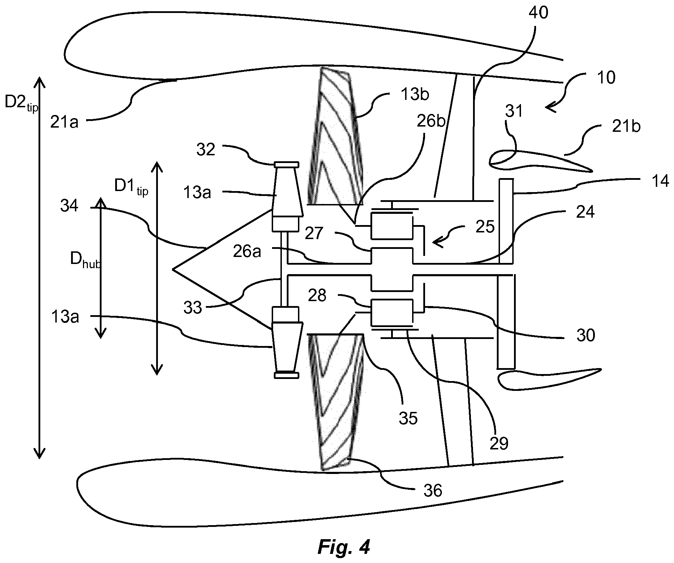

Referring to figure 4, further details of the propulsion system 10 are shown. The first fan 13a comprises a plurality of blades having a smaller diameter than the second fan 13b, with an outer circumference of the fan having a radial extent substantially equal to a radial extent of an inlet 31 of the engine core casing 21 b. The first fan 13a optionally includes an annular shroud 32, which extends around the circumference of the radially outer end of the fan blades. The shroud serves to prevent tip vortices from the fan blades from interfering with the downstream second fan 13b, which would otherwise create turbulence, and so increase second fan noise and reduce second fan efficiency. The shroud 32 also serves to increase the pressure ratio across the first fan 13a, by reducing over-tip leakage, and also reducing the radial component of the first fan 13a exit flow. As will be understood, the shroud 32 could optionally be omitted.

The first fan 13a is mounted to the first output shaft 26a by a fan disc 26a, and also to a central conical hub 33 (also known as a "spinner"). Consequently, each of the spinner 34, first fan 13a and input shaft 24 rotate at the same rate. Optionally, the spinner 34 could include further projections configured to drive the air rearwards, which could act as part of the first fan 13a.

The second fan 13b has an outer diameter D2ₜᵢₚ which is greater diameter than an outer diameter D1ₜᵢₚ of the first fan 13a, and extends to the fan casing 21a, with a minimal gap being provided therebetween. The second fan 13b defines a "hub to tip ratio" defined by the diameter of the hub D_{hub} (calculated by measuring the diameter of the radially inner root of the fan blades of the second fan 13b) by the tip diameter D2ₜᵢₚ (calculated by measuring the diameter of the radially outer tips of the fan blades of the second fan 13b). A low hub to tip ratio is desirable, in order to increase the mass flow of the fan 13b. However, it will be understood that, for a given fan rotational speed, the circumferential velocity of the blades vary from the root 35 to the tip 36, with the tip speed being higher than the root speed. It is desirable for tip speeds in gas turbine engine fans to approach but not exceed Mach 1 in flight, in order to maximise work (i.e. fan pressure ratio), while minimising noise. Consequently, in a conventional turbofan, the velocity of air adjacent the root is relatively low, and so the fan pressure rise at the root is also low. This reduces the thrust produced by the engine for a given engine diameter, and so increases engine weight by forcing a greater diameter for a given ban bypass ratio and thrust.

The present disclosure solves this problem by providing a first, smaller fan 13a having a higher rotational speed relative to the second fan 13b, provided forward of the second fan 13b. Consequently, a high tip speed can be provided for the first fan 13a (typically, close to, but not exceeding, Mach 1), at a relatively low diameter. This air impinges on the downstream second fan 13b, where is accelerated further (albeit only slightly).

In some cases, the first fan 13a may be configured to accelerate air to a higher velocity than that provided by the tip of the second fan 13b. In some cases, the tip speed of the first fan 13a may be supersonic (i.e. greater than Mach 1), while the tip speed of the second fan 13b may be sub-sonic or transonic (i.e. below or close to Mach 1). This is desirable, since it increases fan work, while not resulting in high noise levels, since the high velocity first fan 13a air stream is shielding by the low velocity second fan 13b air stream.

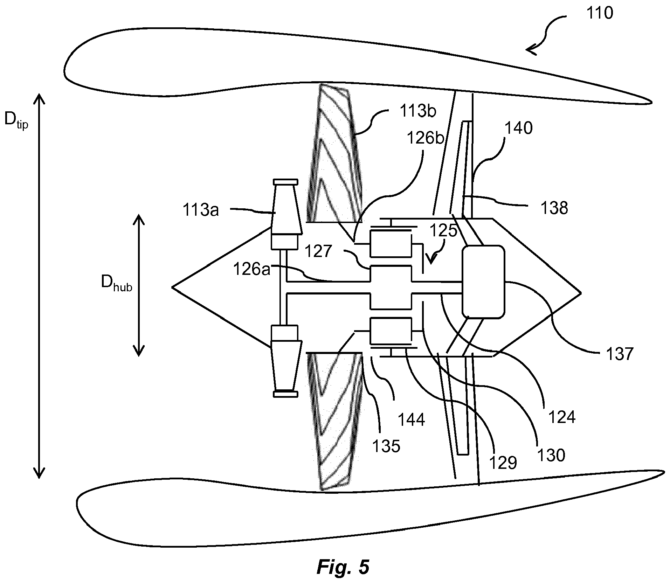

Figure 5 shows a second propulsion system 110. The propulsion system 110 is similar in many ways to the system 10, with only differences between the two being described in detail.

The propulsion system 110 comprises first and second fans 113a, 113b driven by a reduction gearbox 125. The fans 113a, 113b and gearbox 125 are similar to those of the first embodiment, with the first fan 113a being driven by a first output shaft 126a which is coupled to a sun gear 127 of the gearbox 125, with the second fan 113b being coupled to a second output shaft 126b, which is coupled to a planet carrier 130 of the gearbox 125. Again, the gearbox 125 is of a planetary configuration, having a fixed ring gear 129. The relative sizes and speeds of the fans 113a, 113b is also similar those of the fans 13a, 13b.

However, the gas turbine engine is omitted. In its place is an electric motor 137, which is coupled to a gearbox input shaft 124, to drive the sun gear 127 of the gearbox 125, to drive both the fans 113a, 113b. In view of the reduction seed provided by the gearbox 125, the electric motor 137 can operate at a high speed in use for a given second fan 113b diameter and fan tip speed. Consequently, the electric motor can be made smaller, and have a high power to weight ratio, and possibly also a higher efficiency. This is because increasing the speed allows for a higher power for a given torque. Since electrical machines are generally sized by torque, lower torque, higher speed machines can generally be made smaller. This in turn results in smaller coils, and so copper losses can be reduced, thereby increasing efficiency.

On the other hand, again, the first fan 113a rotates at the same speed as the input shaft 124, and so at the relatively high speed of the electric motor 137. Consequently, a high pressure rise is provided by the first fan 113a in spite of its relatively small diameter.

The propulsion system 110 also differs from the system 10 in that a motor cooling system is provided.

The motor cooling system comprises a liquid to air heat exchanger 138 provided within an interior of fan outlet guide vanes 131, which are provided rearward of the second fan 113b. Consequently, efficient cooling is provided, without interrupting the fan airflow.

The cooling system also comprises an air cooling system comprising a cooling air aperture 144 provided adjacent a root 135 of the second fan 113b. Alternatively, the air aperture could be provided adjacent a root of the first fan 113a. Air from the cooling aperture flows over the motor 137 rotor and / or stator (not shown) in use, thereby reducing the temperature of the motor 137, and increasing its efficiency. Due to the high root pressure ratio provided by the fans 113a, 113b compared to conventional direct drive or single stage geared fans, the effectiveness of the cooling air is increased.

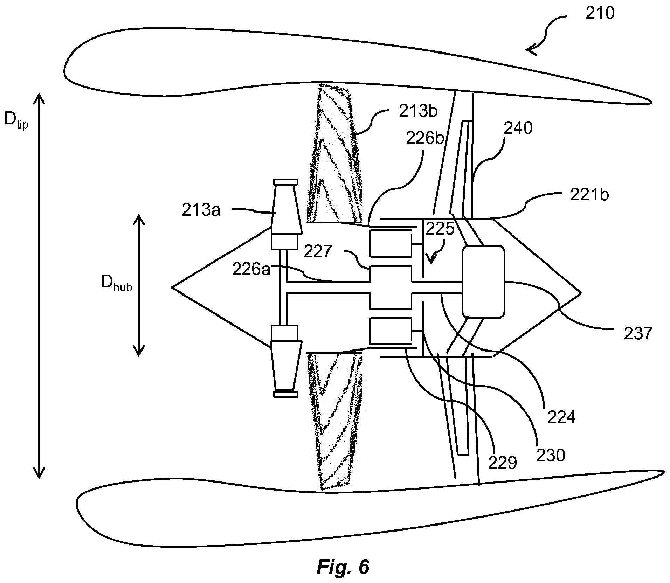

Figure 6 shows a third propulsion system 210. The propulsion system is similar to the system 110, but differs in the type of reduction gearbox used.

The propulsion system 210 again includes first and second fans 213a, 213b driven by a reduction gearbox 225. Again, the gearbox 225 is driven by an electric motor 237 via a sun gear 227. However, the gearbox is a "star" gearbox, rather than a planetary gearbox. As such, the planet carrier 230 is rotationally fixed to static structure such as a motor housing 221b, whereas the ring gear 229 is mounted for rotation. A first output shaft 226a is coupled to the sun gear 227, and so rotates at the same speed as the input shaft 224, similar to the previous embodiments. However, the second output shaft 226b is coupled to the ring gear 229, and so rotates at the rate of the ring gear.

This different gearbox arrangement has two effects. Firstly, the ring gear 229 and second fan 213b rotate in an opposite direction to the first fan 213a. consequently, swirl produced by the first fan 213a is at least partly cancelled by the second fan 213b, thereby further increasing propulsive efficiency and pressure rise provided by the two fans 213a, 213b in combination. Secondly, for a given gearbox geometry (i.e. sun, planet and ring diameters), a different reduction ratio results. Typically, the reduction ratio is between 2 and 3.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

For example, the star gearbox arrangement of figure 5 could be combined with the gas turbine engine driven arrangement of figures 1 to 4. The cooling aperture of the embodiment of figure 5 could be employed for the gas turbine engine of figures 1 to 3, to provide case cooling for example. Similarly, the gas turbine engine could be of a different type, for example having different numbers of compressors and / or turbines. The compressors could be of a different type (e.g. centrifugal). The gearbox reduction ratio could be varied. The propulsion system may comprise an electric motor driving one of the input shaft, one or more planet gears, the ring gear or the output shaft to the first propulsor in addition to a gas turbine engine turbine shaft driving the input shaft. The open rotor variant could be combined with the other embodiments. For example, the open rotor variant could comprise a planetary gearbox, and could comprise a gas turbine engine driving the input shaft.

The gearbox could be of a "compound" type, in which multiple stages of epicyclic gearboxes are provided.

## Claims

1. An aircraft propulsion system (10) comprising:
first and second propulsors (13a, 13b);
an epicyclic reduction gearbox (25) coupled to an input shaft (24), the reduction gearbox (25) comprising a sun gear (27) coupled to the input shaft (24), a plurality of planet gears (28) which mesh with the sun gear (27) and are mounted to a planet carrier (30), and a ring gear (29) which meshes with the plurality of planet gears (28);
wherein the first propulsor (13a) is located upstream of the second propulsor (13b), and wherein the first propulsor (13a) is coupled to the input shaft (24), and the second propulsor (13b) is coupled to one of the planet carrier (30) and the ring gear (29).

2. A propulsion system according to claim 1, wherein the or each of the propulsor comprises an open rotor propeller (313a, 313b).

3. A propulsion system according to claim 1, wherein the or each of the propulsor comprises a ducted fan (13a, 13b).

4. A propulsion system according to any of the preceding claims, wherein the first propulsor (13a) has a smaller outer diameter (D1ₜᵢₚ) than the second propulsor (D2ₜᵢₚ).

5. A propulsion system according to any of the preceding claims, wherein the first propulsor (13a) comprises a rotating shroud (32) provided at a radially outer end of the first propulsor (13a).

6. A propulsion system according to any of the preceding claims, wherein the second propulsor (13b) is mounted to the planet carrier (30).

7. A propulsion system according to any of claims 1 to 5, wherein the second propulsor (213b) is mounted to the ring gear (229).

8. A propulsion system according to any of the preceding claims, wherein the aircraft propulsion system comprises an electric motor (137) coupled to the sun input shaft (124).

9. A propulsion system according to claim 8, wherein the electric motor (137) comprises a fluid cooling system configured to cool one or more of the rotor and the stator of the electric motor, the fluid cooling system comprising cooling passages (138) located within one or more outlet guide vanes (140) located downstream of the second propulsor (113b).

10. A propulsion system according to claim 8 or claim 9, comprising a gas turbine engine comprising a turbine coupled to an electrical generator which is configured to drive the electric motor.

11. A propulsion system according to any of the preceding claims, wherein the propulsion system comprises a gas turbine engine (10) having a turbine (19) coupled to the sun input shaft (24).

12. A propulsion system according to claim 10 or claim 11, wherein the gas turbine engine (10) comprises a gas turbine engine core comprising a compressor (14) coupled to a turbine (17), and wherein the first propulsor (13a) has an outer diameter (D1ₜᵢₚ) substantially equal to a diameter of an inlet (31) of the compressor (14).

13. An aircraft (1) comprising a propulsion system (10) according to any of the preceding claims.
